Europäisches Patentamt

European Patent Office

Office européen des brevets

(11) Publication number: **0 107 185**
**B1**

(12) **EUROPEAN PATENT SPECIFICATION**

(45) Date of publication of patent specification: 26.04.89

(21) Application number: **83110519.2**

(22) Date of filing: **21.10.83**

(51) Int. Cl.⁴: **G 06 F 15/20**

(54) **Image processing apparatus and processing method.**

(30) Priority: **22.10.82 JP 184537/82**

(43) Date of publication of application:
**02.05.84 Bulletin 84/18**

(45) Publication of the grant of the patent:
**26.04.89 Bulletin 89/17**

(84) Designated Contracting States:
**DE FR GB**

(56) References cited:
**GB-A-2 091 526**
**US-A-3 459 392**
**US-A-4 017 985**

(73) Proprietor: **HITACHI, LTD.**
**6, Kanda Surugadai 4-chome Chiyoda-ku**
**Tokyo (JP)**

(72) Inventor: **Kamejima, Kohji**
**2625-3 Shimoinayoshi Chiyoda-mura**
**Niihari-gun Ibaraki-ken (JP)**
Inventor: **Nakano, Yoshiyuki**
**1-10-53 Nishinarusawa-cho**
**Hitachi-shi Ibaraki-ken (JP)**
Inventor: **Fujie, Masakatsu**
**531-328 Taguu Ushiku-machi**
**Inashiki-gun Ibaraki-ken (JP)**
Inventor: **Iwamoto, Taro**
**433-47 Yonezawa-cho**
**Mito-shi Ibaraki-ken (JP)**
Inventor: **Yamamoto, Hiroshi**
**2625-3 Shimoinayoshi Chiyoda-mura**
**Niihari-gun Ibaraki-ken (JP)**

(74) Representative: **Patentanwälte Beetz sen. -**
**Beetz jun. Timpe - Siegfried - Schmitt-Fumian**
**Steinsdorfstrasse 10**
**D-8000 München 22 (DE)**

Courier Press, Leamington Spa, England.

**Description**

The present invention relates to an apparatus and a method for processing three-dimensional topographical information necessary for controlling the movement of an automatic travelling object.

A map which indicates topographical information namely, the arrangement of roads, buildings, obstacles, etc. is indispensable to a travelling type robot.

In a conventional travelling type robot, input images as topographical information have been handled independently for respective frames. In, for example, a system having a plurality of photographing devices, the outputs of the respective photographing devices have been stored in independent memory devices, and images inputted in time series have also been stored in respectively separate memory devices.

With such storage method, however, the information are overlappedly stored, and hence, a large storage capacitor is inevitable. This has resulted in the disadvantage that, in determining the action of the travelling type robot, much labor is required for extracting truly necessary information.

In GB—2 091 526 a system is disclosed for the dynamic display of terrain data which is stored in digital form and which may be viewed on a cathode ray tube display in the form of a moving map which is automatically oriented under control of an aircraft's navigational computer system to the instantaneous position of the aircraft with a heading-up disposition. Hereby said system comprises a main memory to store the map data and arithmetic means to calculate an image for the CRT display.

US—3 459 392 describes a mechanism for guiding vehicles such as a missile, and is more particularly concerned with mechanism which will "home" the missile on a selected target or area. Thereby the system comprises a main memory to store the target image and a means to detect the difference between the target image stored in the main memory and the image of the vidicon sensor.

However, in contrast to the present invention in none of the aforementioned systems a previously given map is revised on the basis of topographical information delivered from an image imput device in time series with the travelling of an automatic travelling object.

Summary of the invention

The present invention has for its object to provide an image processing apparatus and processing method which can prepare a correct map by revising a previously given map on the basis of topographical information delivered from an image input device in time series with the travelling of an automatic travelling object such as a robot.

In order to achieve this object in one aspect of performance of the present invention there is provided an apparatus for processing three-dimensional topographical information on the arrangement of roads, buildings, obstacles and the like necessary for controlling the movement of a travelling object comprising:

storage means for storing three-dimensional map data, and simulator means for simulating a projected two-dimensional image on the basis of the map data stored in said storage means and of the position of said travelling object, characterized by

image input means mounted on the travelling object which comprises an automatic travelling function, whereby said simulator means simulate the two-dimensional image further on the basis of the viewing direction of said image input means and the focal length of a lens used, thereby producing a signal representing a predictive two-dimensional image;

means for comparing an output signal representing an actual two-dimensional input image from said image input means and the signal representing said predictive image, and for obtaining a two-dimensional difference image; and

correction means for updating the map data in said storage means on the basis of said difference image.

In another aspect of performance of the present invention there is provided a method which processes three-dimensional topographical information on the arrangement of roads, buildings, obstacles and the like which are not necessarily located perpendicularly to the direction of the movement of an automatic travelling object necessary for controlling the movement of a travelling object and which employs storage means for storing three-dimensional map data and image input means mounted on the travelling object for producing a signal representing a two-dimensional intensity distribution of light reflected or emitted from the surrounding landscape viewed from said travelling object, comprising reading out the three-dimensional map data from said storage means and simulating a projected two-dimensional image on the basis of the map data stored in said storage means and of the position of said travelling object characterized by the steps of

simulating the output of said image input means for the location of the travelling object by calculating a predictive two-dimensional image on the basis of said map data, the position of said travelling object, the viewing direction of said image input means, and the focal length of a lens used.

comparing said predictive two-dimensional image and an actual two-dimensional input image from said input means for obtaining a two-dimensional difference image; and updating the map data stored in said storage means on the basis of said difference image.

## Brief description of the drawings

Figure 1 is a block diagram showing an example of a travelling robot control system which employs an image processing apparatus according to the present invention;

Figure 2 is a block diagram showing an embodiment of the image processing apparatus of the present invention;

Figure 3 is a perspective view showing the setup of a practicable example of an arithmetic unit in Figure 2;

Figures 4 to 6 are diagrams for explaining another embodiment of the arithmetic unit in Figure 2; and

Figures 7 to 10 are diagrams for explaining an embodiment of a correction unit in Figure 2.

## Detailed description of the invention

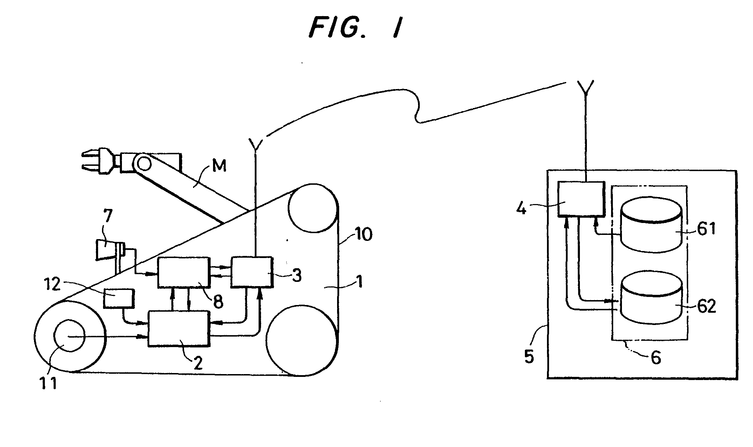

Figure 1 is a block diagram showing an example of a travelling robot system to which the present invention is applied. Referring to the figure, numeral 1 designates a robot capable of travelling, which is equipped with a crawler 10 and a manipulator M to be driven by motors and the detailed construction of which is disclosed in U.S. Patent Application Publ. No. 4483407 by way of example. The control circuit 2 of the robot 1 is connected with the storage device 6 of a control station 5 through transmitter-receivers 3, 4. The storage device 6 includes a general building file 61 and an individual building file 62. Upon receiving an induction signal from the control station 5, the control circuit 2 controls the robot 1. The robot 1 includes an image input device 7 such as television camera, the output of which is applied to an image processor 8. Information on the actual travelling value and velocity of the robot 1 are sent from an encoder 11 and gyroscope 12 to the control circuit 2, and are used for the control of the robot 1 and image correction.

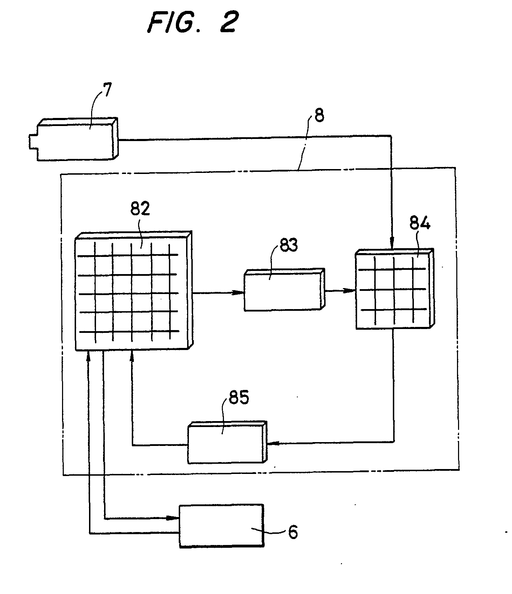

Figure 2 is a block diagram showing an embodiment of the image processor 8 in Figure 1. Referring to Figure 2, numeral 82 designates a main memory, numeral 83 an arithmetic unit which calculates a predictive image, numeral 84 an auxiliary memory which stores the difference between an input image and the predictive image, and numeral 85 a correction unit which updates the content of the main memory 82 on the basis of the difference signal stored in the auxiliary memory 84.

The image input device 7 is placed on the travelling robot, and is manipulated by another manipulation means. A map is stored in the main memory 82. In the present invention, the expression "map" signifies one in which are collected the information of the positions, sizes, shapes etc. of roads, buildings, obstacles, etc. existing around the robot. Concretely, a memory which employs storage elements arrayed in, e.g., two dimensions and in which the data of the items, sizes, shapes etc. of roads, buildings, obstacles etc. are written in the arrayed elements shall be called the "map". In other words, the content of the main memory 82 expresses the surroundings of the robot in the form of electric signals. The arithmetic unit 83 calculates the projection of topography (the configuration of the ground) expressed by the map, on the basis of the map stored in the main memory 82, the position of the robot, the photographing direction of the image input device 7, and the focal length of a lens used. This calculation is done for the following purpose. The content of the main memory 82 signifies topography created on the basis of information obtained through the image input device 7, except topography previously programmed as transcendental knowledge, and it is not definite topography obtained by surveying the actual surroundings. Accordingly, the topography indicated by the main memory 82 does not always agree with the actual one. In this sense, the map of the present invention expresses an imaginary landscape. Here, a subject for appreciating the propriety of the map will be considered. At this time, when it is remembered that the actual topography cannot be directly measured and that only the image obtained through the image input device 7 is utilizable, the appreciation is performed with the level of the input image. More specifically, an image obtained by assuming that the topography expressed by the map of the main memory 82 be observed through the image input device 7 is compared with the actual input image obtained through the image input device 7, whereby the propriety of the map is appreciated. As stated above, the arithmetic unit 83 delivers as its output the image which is forecast to arise from the imaginary landscape. In this sense, the output of the arithmetic unit 83 shall be called the "predictive image".

A process for correcting the map by the use of the predictive image will be explained below with reference to Figures 1 and 2.

Step 1; The data of the general building file 61 are transmitted to the main memory 82.

Step 2; The travelling of the robot 1 is started. This travelling of the robot 1 is controlled by the control circuit 2.

Step 3; The outputs of the encoder 11 and gyroscope 12 are integrated, and then applied to the arithmetic unit 83.

Step 4; The predictive image is prepared by the arithmetic unit 83 on the basis of the data of the main memory 82 and the data inputted at Step 3.

Step 5; The photographed image of the image input device 7 is applied to the auxiliary memory 84.

Step 6; The reversal image of the output (predictive image) of the arithmetic unit 83 is applied (added) to the auxiliary memory 84.

Step 7; The difference image between the photographed image and the predictive image is applied to the correction unit 85.

Step 8; The output of the correction unit 85 is added to the content of the main memory 82, thereby to correct the data of the main memory 82.

Step 9; The data of the main memory 82 are transmitted to the individual building file 62.

Step 10; Whether or not the robot lies at a stop position is discriminated. Unless it lies at the stop position, the process returns to Step 1. If it lies at the stop position, the subsequent operation is stopped.

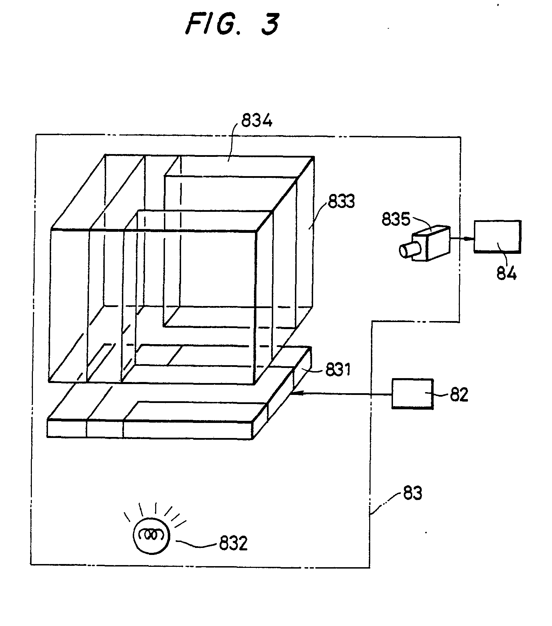

In obtaining the predictive image at Step 4, an optical path which extends from a topographical item such as building to the image input device 7 may be simulated. This is realized by, for example, a device which performs the analog operations of light as shown in Figure 3. Here, numeral 831 designates a map display plate which is made of, e.g., a liquid crystal and whose transparent-opaque part can have its pattern changes by an electric signal or the like. Numeral 832 designates an illuminator. Shown at numeral 833 is a transparent vessel which receives therein a light scattering substance, for example, a suspension. Now, when the pattern of the transparent-opaque part of the display plate 831 is prepared on the basis of the stored content of the main memory 82, a luminous pattern 834 corresponding to the topography is produced within the vessel 833. The predictive image is obtained by photographing this luminous pattern with a camera 835. At this time, it is to be understood that, by introducing a simple conversion computer between the main memory 82 and the display plate 831, predictive images for the topography in all directions and contraction scales can be calculated with the position of the camera 835 kept fixed.

The series of processing for calculating the predictive image can also be performed by digital operations. To this end, the simulation of the optical path which extends from the road, building, obstacle or the like stored in the main memory 82, to the image input device 7 may be done with a computer.

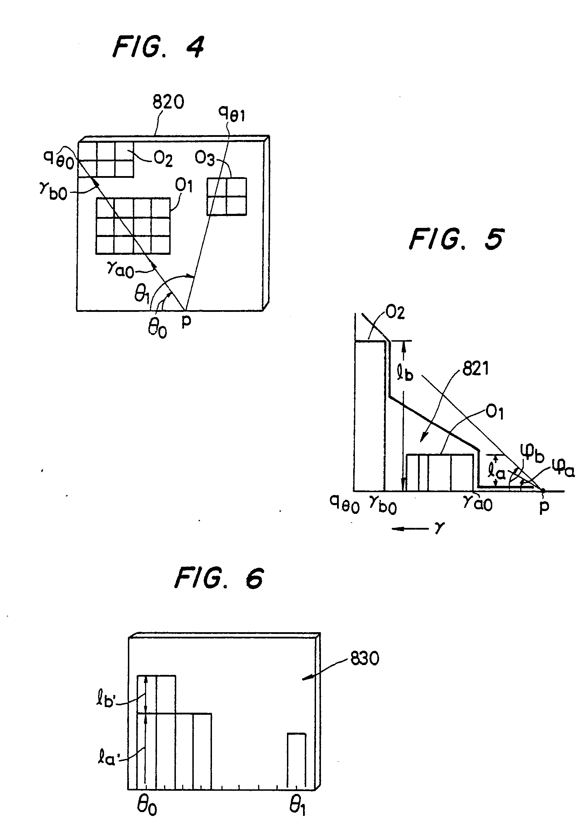

An example of the simulation is illustrated in Figures 4 to 6. First, it is assumed that a map of contents indicated by numerals 820 and 821 in Figures 4 and 5 by way of example be stored in the main memory 82. In the figures, symbols $O_1$, $O_2$ and $O_3$ shall indicate objects such as buildings and obstacles. It is also assumed that the image input device 7 lie at a point corresponding to a point $p$ on the map and be delivering a landscape in a range corresponding to $\theta_0$—$\theta_1$. A predictive image 830 in Figure 6 to be obtained on the basis of the map 820, 821 is prepared in accordance with the following algorithm:

[Algorithm A]
(Step 0)
The range $\theta_0$—$\theta_1$ is divided. It is divided in eight in the example of Figure 6. thereafter, the algorithm proceeds to the next step by putting $\theta = \theta_0$.

(Step 1)
An object is retrieved successively in the direction $\theta$ from the point $p$. In the example of Figure 5, the object $O_1$ is found out at a distance $\gamma_{a0}$ from the point $p$.

(Step 2)
The height $l_a$ of the object $O_1$ is read from the said memory 82.

(Step 3)
The magnification $\alpha(\gamma_{a0})$ of the lens in the image input device 7 is evaluated as a function of the distance $\gamma_{a0}$, and an image height $l_a'$ is calculated as follows:

$$l_a' = \alpha(\gamma_{a0}) \cdot l_a$$

(Step 4)
A device of the height $l_a'$ is depicted at the position $\theta_0$ on the predictive image plane 830.

(Step 5)
The retrieval is further performed from $\gamma_{a0}$ in the direction $\theta$. At this time, objects of heights less than $\gamma/\gamma_{a0} \, l_a$ for various $\gamma$'s are neglected. In the example of Figure 4, the object $O_2$ is found out at a point $\gamma = \gamma_{b0}$.

(Step 6)
The height $l_b$ of the object $O_2$ is read from the main memory 82.

(Step 7)
The magnification $\alpha(\gamma_{b0})$ of the lens is evaluated as a function of the distance $\gamma_{b0}$, and an image height $l_b'$ is calculated as follows:

$$l_b' = \alpha(\gamma_{b0}) \cdot [l_b - l_a(\frac{\gamma_{b0}}{\gamma_{a0}})]$$

(Step 8)
A device of the height $l_b'$ is added over the device corresponding to the object $O_1$, at the position $\theta_0$ on the predictive image plane 830.

(Step 9)
Unless the distance gets to the boundary of the map, operations similar to (Step 5)—(Step 8) are repeated. If the boundary of the map is reached, $\theta$ is altered to the next division, and the process is returned to (Step 1). Further, when $\theta = \theta_1$ holds, the operations are ended.

While, in the aforementioned [Algorithm A], the retrieval is performed successively in the direction $\theta$, such processing may well be done in parallel.

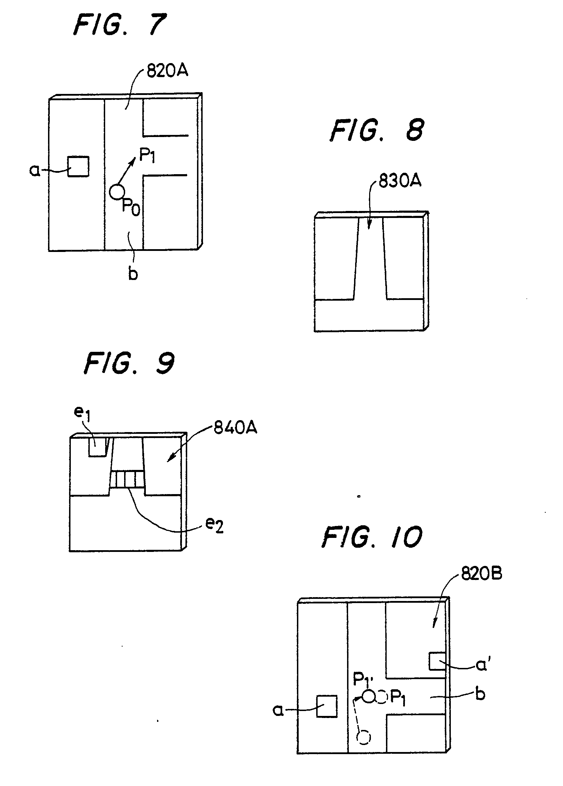

Next a process for correcting the map with the predictive image will be described in detail with reference to Figures 7 to 10. First, it is assumed that, at an initial time $t_0$, a map as indicated by symbol 820A in Figure 7 be stored in the main memory 82. Here, it is supposed that the existence of a building $a$ and a T-shaped road $b$ be known as surroundings at the time $t_0$ at which the motion of the robot starts. Of course, in a case where quite no knowledge is obtained at the time $t_0$, the stored content 820A is blank, that is, a road over the whole surface. Even in this case, the process to be stated below applies quite similarly.

In the map 820A shown in Figure 7, a circle $O(P_0)$ denotes the position of the robot, and an arrow indicates the travelling direction thereof.

Here it is assumed that the robot be travelling so as to lie at the fore end $P_1$ of the arrow at a time $t_1$ ($t_0 < t_1$). At this time, the arithmetic unit 83 carries out the computation as explained in conjunction with Figure 3 or Figures 4 to 6 and delivers a predictive image as indicated by symbol 830A in Figure 8. It is now assumed that an input image as shown at 840A in Figure 9 be received from the image input device 7 at the time $t_1$. Herein, the following differences are detected between the predictive image 830A of Figure 8 and the input image 840A of Figure 9.

(i) Topographical items $e_1$ and $e_2$ appear in the input image 840A.

(ii) In both the images, the positions of roads are different.

On the basis of the detected results, the correction unit 85 updates the stored content of the main memory 82 into a map 820B shown in Figure 10. Here, a building a' is added in correspondence with $e_1$, and the position of the robot is corrected from $P_1$ to $P_1'$. Here, the item $e_2$ is decided a figure depicted on the road and is omitted on the map. The decision is made on the basis of a position where the difference image $e_2$ exists, or the position of an object which is thought to produce the difference image $e_2$.

Here, the new object a' is added on the map. This is performed in conformity with the following algorithm:

[Algorithm 1]
(Step 1-1) Among objects which might produce difference images, the largest one is placed on the map.

(Step 1-2)
In the object set anew, a part which is contradictory to a known road, building or obstacle is deleted.

(Step 1-3)
An input image is gained anew, and the algorithm is returned to Step 1-1.

[Algorithm 2]
(Step 2-1)
Among objects which might product difference images, the smallest one is added on the map.

(Step 2-2)
An input image is gained anew, and the algorithm is returened to Step 2-1.

In the aforementioned algorithm 1, the unknown object contracts with the addition of information based on the input image. In contrast, in the algorithm 2, the unknown object expands with increase in information. In either case, it is to be understood that, as more information are stored with the travelling of the robot, or the like, the map converges to the true topography.

As described above, the function of the correction unit 85 for use in the present invention is realized by a computer. In this case, however, the operator's judgement may well be utilized. It is of course possible that the operator performs all the correcting operations. Especially in the latter case, the predictive image and the input image are arrayed and presented in front of the operator, whereby the computation of the difference image can be omitted.

As set forth above, according to the present invention, the efficient storage of image information becomes possible. As a result, the control of a machine which operates using the image information as inputs can be facilitated.

## Claims

1. An apparatus for processing three-dimensional topographical information on the arrangement of roads, buildings, obstacles and the like necessary for controlling the movement of a travelling object (1) comprising:
— storage means (82) for storing three-dimensional map data, and
— simulator means (83) for simulating a projected two-dimensional image on the basis of the map data stored in said storage means (82) and of the position of said travelling object (1), characterized by
— image input means (7) mounted on the travelling object (1) which comprises an automatic travelling function, whereby said simulator means (83) simulate the two-dimensional image further on the basis of the viewing direction of said image input means (7) and the focal length of a lens used, thereby producing a signal representing a predictive two-dimensional image;
— means for comparing (84) an output signal representing an actual two-dimensional input image from said image input means (7) and the signal representing said predictive image, and for obtaining a two-dimensional difference image; and
— correction means (85) for updating the map data in said storage means (82) on the basis of said difference image.

2. An apparatus according to claim 1, wherein said simulator means comprise:
— a map display plate (831) which displays a distribution of transparency-opaqueness corresponding to the stored content of said storage means (82);
— an illuminator (832) which is arranged on one side of said display plate;
— a transparent vessel (833) which is located on the other side of said display plate and which has a light scattering substance therein; and
— a camera (835) which photographs a luminous pattern of said transparent vessel and the output signal of which is delivered as the signal representing said predictive image.

3. An apparatus according to claim 1, wherein said simulator means comprise a digital computer which calculates the projected two-dimensional image data in accordance with an optical path that extends from the road, building, obstacle and the like stored in said storage means (82) to said image input means (7).

4. A method which processes three-dimensional topographical information on the arrangement of roads, buildings, obstacles and the like which are not necessarily located perpendicularly to the direction of the movement of an automatic travelling object (1) necessary for controlling the movement of an automatic travelling object (1) and which employs storage means (82) for storing three-dimensional map data and image input means (7) mounted on the travelling object (1) for producing a signal representing a two-dimensional intensity distribution of light reflected or emitted from the surrounding landscape viewed from said travelling object (1), comprising reading out the three-dimensional map data from said storage means (82) and simulating a projected two-dimensional image on the basis of the map data stored in said storage means (82) and of the position of said travelling object (1), characterized by the steps of

—simulating the output of said image input means (7) for the location of the travelling object (1) by calculating a predictive two-dimensional image on the basis of said map data, the position of said travelling object (1), the viewing direction of said image input means (7), and the focal length of a lens used;

—comparing said predictive two-dimensional image and an actual two-dimensional input image from said input means (7) for obtaining a two-dimensional difference image; and

—updating the map data stored in said storage means (82) on the basis of said difference image.

5. A method as defined in claim 4, wherein at said simulating step the content of said storage means (82) is displayed on a map display plate (831) which displays a distribution of transparency-opaqueness corresponding to the stored content of said storage means (83) and which is illuminated by an illuminator (832) arranged on its one side, whereas a transparent vessel (833) is located on its other side and which has a light scattering substance therein and whereby a camera (835) photographs a luminous pattern of said transparent vessel and delivers an output signal to said means for comparing (84) as the signal representing said predictive image.

6. A method as defined in claim 4, wherein in a case where a difference has been detected at the comparing step, the largest object is set anew on a map in a range not contradictory to the existing building, obstacle and the like in the input image and the map, whereupon the map is compared with sequentially received input images so as to delete any excess part of the object set anew, at the updating step.

7. A method as defined in claim 4, wherein in a case where a difference has been detected at the comparing step, the smallest objects which bring about such differences are successively added on a map at the updating step.

8. A method as defined in claim 4, wherein in the updating step positions where objects causing differences at the comparing step are classified, and only the objects necessary for determining a travelling scheme of the travelling object are selectively added on a map.

**Patentansprüche**

1. Gerät für die Verarbeitung von für die Steuerung der Bewegung eines sich fortbewegenden Gegenstandes (1) erforderlicher dreidimensionaler, topographischer Information, mit

—einer Speichereinrichtung (82) zur Speicherung von dreidimensionalen Kartendaten und

—einer Simulatoreinrichtung (83) zur Nachbildung eines zweidimensionalen Entwurfsbildes auf der Grundlage der in der Speichereinrichtung (83) gespeicherten Kartendaten und der Position des sich fortbewegenden Gegenstandes (1), gekennzeichnet durch

—eine Bildeingabeeinrichtung (7), die auf dem sich fortbewegenden Gegenstand (1), der eine automatische Fortbewegungsfunktion aufweist, befestigt ist, wobei die Simulatoreinrichtung (83) das zweidimensionale Bild ferner auf der Grundlage der Beobachtungsrichtung der Bildeingabeeinrichtung (7) und der Brennweite der verwendeten Linse nachbildet und dabei ein Signal erzeugt, das ein vorausberechntes, zweidimensionales Bild darstellt;

—eine Einrichtung (84) zum Vergleich eines ein momentanes zweidimensionales Eingabebild darstellenden Ausgangssignales der Bildeingabeeinrichtung (7) mit dem das vorausberechnete Bild darstellenden Signal und zur Gewinnung eines zweidimensionalen Differenzbildes; und

—eine Korrektureinrichtung (85) zur Aktualisierung der Kartendaten in der Speichereinrichtung (82) auf der Grundlage des Differenzbildes.

2. Gerät gemäß Anspruch 1, in dem die Simulatoreinrichtung

—eine Kartenanzeigetafel (831), die eine dem Speicherinhalt der Speichereinrichtung (82) entsprechende Durchlässigkeits-/Undurchlässigkeits-Verteilung anzeigt;

—eine Beleuchtungseinrichtung (832), die auf einer Seite der Anzeigetafel angeordnet ist;

—einen durchsichtigen Behälter (833), der auf der anderen Seite der Anzeigetafel angebracht ist und eine lichtstreuende Substanz enthält; und

—eine Kamera (835), die das Leuchtmuster des durchsichtigen Behälter fotografiert und deren Ausgangssignal als das das vorausberechnete Bild darstellende Signal ausgegeben wird.

3. Gerät gemäß Anspruch 1, in dem die Simulatoreinrichtung einen Digitalcomputer aufweist, der die zweidimensionalen Entwurfsbilddaten entsprechend der optischen Weglänge, die sich von der in der Speichereinrichtung (82) gespeicherten Straße, dem Gebäude, dem Hindernis oder ähnlichem zur Bildeingabeeinrichtung (7) erstreckt, berechnet.

4. Verfahren, das die zur Steuerung der Bewegung eines automatisch sich fortbewegenden Gegenstandes (1) erforderliche dreidimensionale, topographische Information über die Anordnung von nicht notwendig senkrecht zur Bewegungsrichtung des automatisch sich fortbewegenden Gegenstandes (1) gelegenen Straßen, Gebäuden, Hindernissen und ähnlichem verarbeitet und das eine Speichereinrichtung (82) zur Speicherung dreidimensionaler Kartendaten und eine auf dem sich fortbewegenden Gegenstand (1) angebrachte Bildeingabeeinrichtung (7) zur Erzeugung eines Signales, das eine zweidimensionale Intensitätsverteilung desjenigen Lichtes, das von der umgebenden Landschaft, die von dem sich fortbewegenden Gegenstand (1) beobachtet wird, reflektiert oder ausgesandt wird, verwendet und das Auslesen der dreidimensionalen Kartendaten aus der Speichereinrichtung (82) und die Nachbildung eines zweidimensionalen Entwurfsbildes auf der Grundlage der in der Speichereinrichtung (82) gespeicherten Kartendaten und der Position des dich fortbewegenden Gegenstandes (1) enthält, gekennzeichnet durch die Schritte

—des Nachbildens der Ausgabe der Bildeingabeeinrichtung (7) zur Ortung des sich fortbewegenden Gegenstandes (1), indem auf der Grundlage der Karendaten, der Position des sich fortbewegenden Gegenstandes (1), der Beobachtungsrichtung der Bildeingabeeinrichtung (7) und der Brennweite der verwendeten Linse ein vorausberechnetes zweidimensionales Bild berechnet wird;

—des Vergleichs des zweidimensionalen Vorhersagebildes mit einem momentanen zweidimensionalen Eingabebild aus der Bildeingabeeinrichtung (7) für die Gewinnung eines zweidimensionalen Differenzbildes; und

—des Aktualisierens der in der Speichereinrichtung (82) gespeicherten Kartendaten auf der Grundlage des Differenzbildes.

5. Verfahren gemäß Anspruch 4, in dem im Nachbildungsschritt der Inhalt der Speichereinrichtung (82) auf einer Kartenanzeigetafel (831) angezeigt wird, die die Verteilung der Durchlässigkeits-/Undurchlässigkeits-Verteilung, die dem Speicherinhalt der Speichereinrichtung (82) entspricht, anzeigt und die mittels einer auf deren einer Seite angeordneten Beleuchtungseinrichtung (832) beleuchtet wird, während auf deren anderer Seite ein durchsichtiger Behälter (833) angeordnet ist, der eine lichtstreuende Substanz enthält, wobei eine Kamera (835) das Leuchtmuster des durchsichtigen Behälter fotografiert und an die Vergleicheinrichtung (84) ein Ausgangssignal, das das vorausberechnete Bild darstellt, liefert.

6. Verfahren gemäß Anspruch 4, in dem dann, wenn im Vergleichsschritt eine Differenz festgestellt worden ist, der größte Gegenstand von neuem in einem Bereich, der den bestehenden Gebäuden, Hindernissen und ähnlichem im Eingabebild und auf der Karte nicht widerspricht, auf der Karte neu gesetzt wird, woraufhin die Karte im Aktualisierungsschritt mit den nach einander empfangenen Eingabebildern verglichen wird, um jeglichen zu großen Teil des von neuem gesetzten Gegenstandes zu löschen.

7. Verfahren gemäß Anspruch 4, in dem dann, wenn im Vergleichsschritt ein Unterschied festgestellt worden ist, die kleinsten Gegenstände, die Differenzen erzeugen, im Aktualisierungsschritt nacheinander zu der Karte hinzugefügt werden.

8. Verfahren gemäß Anspruch 4, in dem im Aktualisierungsschritt die Positionen, an denen die im Vergleichsschritt Differenzen erzeugenden Gegenstände klassifiziert werden und nur diejenigen Gegenstände, die für die Bestimmung eines Fortbewegungsschemas des sich fortbewegenden Gegenstandes erforderlich sind, ausgewählt und zur Karte hinzugefügt werden.

## Revendications

1. Dispositif pour le traitement d'une information topographique tridimensionnelle concernant la disposition de routes, de bâtiments, d'obstacles et analogues, nécessaire pour la commande du déplacement d'un objet mobile (1), comprenant:
—des moyens de mémoire (82) servant à mémoriser des données d'une carte tridimensionnelle, et
—des moyens de simultation (83) servant à simuler une image bidimensionnelle projetée, sur la base des données de la carte mémorisées dans lesdits moyens de mémoire (82), et de la position dudit objet mobile (1), caractérisé par
—des moyens (7) d'entrée d'images, montés sur l'objet mobile (1) qui comporte une fonction de déplacement automatique, lesdits moyens de simulation (83) simulant l'image bidimensionnelle, de façon complémentaire, sur la base de la direction d'observation desdits moyens (7) d'entrée d'images et sur la base de la distance focale d'une lentille utilisée, ce qui fournit un signal représentant une image bidimensionnelle prédictive;
—des moyens pour comparer (84) un signal de sortie représentatant une image d'entrée bidimensionnelle réelle et fourni par lesdits moyens (7) d'entrée d'images, et le signal représentant ladite image prédictive, et servant à produire une image bidimensionnelle de différence; et
—des moyens de correction (85) servant à mettre à jour les données de la carte dans lesdits moyens de mémoire (82) sur la base de ladite image de différence.

2. Dispositif selon la revendication 1, dans lequel lesdits moyens de simulation comprennent:
—un panneau (831) d'affichage de la carte, qui affiche une distribution de transparence-opacité correspondant au contenu mémorisé desdits moyens de mémoire (82);
—un dispositif d'éclairement (832), qui est disposé d'un côté dudit panneau d'affichage;
—une enceinte transparente (833), qui est située de l'autre côté dudit panneau d'affichage et contient en elle une substance dispersant la lumière; et
—un appareil de prise de vues (835), qui photographie une forme lumineuse de ladite enceinte transparente et dont le signal de sortie est délivré en tant que signal représentant ladite image prédictive.

3. Dispositif selon la revendication 1, dans lequel lesdits moyens de simulation comprennent un ordinateur qui calcule les données de l'image bidimensionnelle projetée, conformément à un trajet optique qui s'étend depuis la route, le bâtiment, l'obstacle et analogue, mémorisé dans lesdits moyens de mémoire (82) jusqu'auxdits moyens (7) d'entrée d'images.

4. Procédé pour traiter une information topographique tridimensionnelle concernant la disposition de routes, de bâtiments, d'obstacles et analogues, qui ne sont pas nécessairement disposés perpendiculairement à la direction de déplacement d'un objet mobile automatique (1), et nécessaire pour commander le déplacement d'un objet mobile automatique (1), ce procédé utilisant des moyens de mémoire (82) servant à mémoriser des données d'une carte tridimensionnelle, et des moyens (7) d'entrée d'images, montés sur l'objet mobile (1) pour produire un signal représentant une distribution bidimensionnelle d'intensité de la lumière réfléchie ou émise par le terrain environnement, à partir dudit objet mobile (1), et comprenant la lecture des données de la carte tridimensionnelle à partir desdits moyens de mémoire (82), et la simulation d'une image bidimensionnelle projetée sur la base des données de la carte mémorisées dans lesdits moyens de mémoire (82) et sur la base de la position dudit objet mobile (1), caractérisé par les étapes consistant à:

—simuler le signal de sortie desdits moyens (7) d'entrée d'images pour la localisation de l'objet mobile (1) grâce au calcul d'une image bidimensionnelle prédictive sur la base desdites données de la carte, de la position dudit objet mobile (1), de la direction d'observation desdits moyens (7) d'entrée d'images et de la distance focale d'un objectif utilisé;

—comparter ladite image bidimensionnelle prédictive et une image d'entrée bidimensionnelle réelle délivrée par lesdits moyens d'entrée (7) pour obtenir une image bidimensionnelle de différence; et

—mettre à jour les données de la carte, mémorisées dans lesdits moyens de mémoire (82), sur la base de ladite image de différence.

5. Procédé selon la revendication 4, selon lequel lors de ladite étape de simulation, le contenu desdits moyens de mémoire (82) est affiché sur un panneau (831) d'affichage de la carte, qui affiche une distribution de transparence-opacité correspondant au contenu mémorisé desdits moyens de mémoire (82) et qui est éclairé par un dispositif d'éclairement (832) disposé sur l'un des côtés du panneau, tandis qu'une enceinte transparente (832) est située de l'autre côté, cette enceinte contenant en elle une substance dispersant la lumière, et selon lequel un appareil de prise de vues (835) photographie une forme lumineuse de ladite enceinte transparente et envoie un signal de sortie auxdits moyens comparateurs (84) en tant que signal représentant ladite image prédictive.

6. Procédé selon la revendication 4, selon lequel dans le cas où une différence a été détectée lors de l'étape de comparaison, on positionne à noveau l'objet le plus grand, sur une carte, dans un secteur non en contradiction avec le bâtiment, l'obstacle existant et analogue dans l'image d'entrée et sur la carte, à la suite de quoi on compare la carte à des images d'entrée reçues successivement de manière à supprimer toute partie en excès de l'objet à nouveau positionné, lors de l'étape de remise à l'état initial.

7. Procédé selon la revendication 4, selon lequel, dans le cas où une différence a été détectée lors de l'étape de comparaison, on ajoute successivement sur une carte les objets les plus petits, qui provoquent l'apparition de telles différences, lors de l'étape de mise à jour.

8. Procédé selon la revendication 4, selon lequel lors de l'étape de mise à jour, on classe les positions, où se situent des objets provoquant des différences lors de l'étape de comparaison, et on ajoute de façon sélective, sur la carte, uniquement les objets nécessaires pour déterminer un trajet de déplacement de l'objet mobile.

# FIG. 1

EP 0 107 185 B1

# FIG. 2

## FIG. 3

## FIG. 4

## FIG. 5

## FIG. 6

4

## FIG. 7

820A

a

P₁

P₀

b

## FIG. 8

830A

## FIG. 9

e₁

840A

e₂

## FIG. 10

820B

a'

b

P₁'

P₁

a